# EUROPÄISCHE PATENTANMELDUNG

(11) **EP 4 230 469 A1**
(43) Veröffentlichungstag der Anmeldung: **23.08.2023**
(21) Anmeldenummer: 22157866.9
(22) Anmeldetag: 22.02.2022
(51) Int. Cl.: B60L 13/10, B60L 15/20, H02K 41/03, B60L 13/03, B60L 15/00, H02P 6/00, H02P 25/064

(54) **VERFAHREN ZUR ERMITTLUNG EINES LUFTSPALTES ZWISCHEN EINEM TRANSPORTLÄUFER UND EINEM STATORSEGMENT MITHILFE EINES AUTOMATISIERUNGSGERÄTS**

(71) Anmelder: Siemens Aktiengesellschaft, 80333 München (DE)
(72) Erfinder: Binkert, Tobias, 91336 Heroldsbach (DE)
(74) Vertreter: Siemens Patent Attorneys

(57) **Zusammenfassung**

Die Erfindung betrifft ein Verfahren zur Ermittlung eines Luftspaltes zwischen einem Transportläufer (14) und einem Statorsegment (13.1,13.2), wobei der Transportläufer (14) und das Statorsegment (13.1,13.2) als eine Linearmotoreinheit (LME) eines linearmotorbasierten Transportsystems (100) betrieben werden, und der Linearmotoreinheit (LME) eine Kraftkonstante zugeordnet wird, wobei das Statorsegment (13.1,13.2) mit einem Statorstrom versorgt wird, wodurch ein Magnetfeld gebildet wird und dadurch eine Vorschubkraft (F_{M}) für einen Vorschub des Transportläufers (14) entsteht, wobei eine Beschleunigungsfahrt des Transportläufers (14) durchgeführt wird, dabei wird der aktuelle Statorstrom gemessen und es werden Geschwindigkeits-Istwerte ermittelt, aus welchem wiederum eine Geschwindigkeitsänderung pro Zeiteinheit ermittelt wird, aus welcher wiederum eine Beschleunigung ermittelt wird, wobei die aktuelle Vorschubkraft (FM) aus dem Produkt der Kraftkonstante und dem aktuellen Statorstrom ermittelt wird, wobei mit der aktuellen Vorschubkraft (FM) und der Beschleunigung eine virtuelle Masse des Transportläufers (14) mit der Newtonschen Bewegungsgleichung ermittelt wird, wobei für eine Aussage über den derzeit vorherrschenden Luftspalt eine Beziehung zwischen einem Zuwachs der virtuellen Masse und einer Luftspaltvergrößerung genutzt wird und daraus ein Größenwert für den Luftspalt errechnet wird.

## Beschreibung

Die Erfindung betrifft ein Verfahren zur Ermittlung eines Luftspaltes zwischen einem Transportläufer und einem Statorsegment, wobei der Transportläufer und das Statorsegment als eine Linearmotoreinheit eines linearmotorbasierten Transportsystems betrieben werden, und der Linearmotoreinheit eine Kraftkonstante zugeordnet wird, wobei das Statorsegment mit einem Statorstrom versorgt wird, wodurch ein Magnetfeld gebildet wird und dadurch eine Vorschubkraft für einen Vorschub des Transportläufers entsteht.

Auch betrifft die Erfindung ein Automatisierungsgerät, ausgestaltet für eine Ermittlung eines Luftspaltes zwischen einem Transportläufer und einem Statorsegment, wobei der Transportläufer und das Statorsegment als eine Linearmotoreinheit eines linearmotorbasierten Transportsystems ausgeführt sind, und der Linearmotoreinheit eine Kraftkonstante zugeordnet ist, wobei das Statorsegment mit einem Statorstrom versorgt wird, wodurch ein Magnetfeld gebildet wird und dadurch eine Vorschubkraft für einen Vorschub des Transportläufers entsteht.

Im Sinne der Erfindung wird unter Statorsegment ein Primärteil eines Linearmotors verstanden, in dem Zusammenhang weist ein Transportläufer ein Sekundärteil des Linearmotors auf. Durch ein individuelles Bestromen von beispielsweise Spulen zum Erzeugen eines magnetischen Wanderfeldes wird ein Magnetfeld erzeugt und der Transportläufer bzw. sein Sekundärteil kann sich über das Statorsegment bzw. dessen Primärteil hinwegbewegen. Das magnetische Wanderfeld nimmt demnach Dauermagnete des Transportläufers mit. Durch eine Regelung der Stromstärke des Stromes durch die Spulen kann ein Kraftbedarf und Geschwindigkeit angepasst werden.

Aus der EP 3 367 558 A1 ist ein Verfahren zum Betreiben eines linearmotorbasierten Transportsystems und eine Regeleinheit bekannt. Bei dem bekannten Verfahren bzw. Automatisierungsgerät ist es von Nachteil, dass ein Luftspalt zwischen dem Transportläufer und einem Statorsegment nur manuell oder mit Hilfe von zusätzlich angebrachten Sensoren ermittelt werden kann.

Damit derartige linearmotorbasierte Transportsysteme ohne Störung, insbesondere ohne Vibrationen, verfahren werden können, müssen die verwendeten Linearmotoren mit korrekten Regelungsparametern in Betrieb genommen werden. Die Regelungsparameter des Linearmotors wiederum sind auf eine Luftspaltgröße laut Datenblatt des Motors abgestimmt. Bei Linearmotoren ist die Einhaltung der Luftspaltgröße daher obligatorisch, um den Motor mit den elektrischen Nenndaten des Motors einwandfrei betreiben zu können. Entscheidend für einen reibungslosen Betrieb der Linearmotoreinheit ist somit die Beachtung des korrekten Einbaumaßes der Linearmotoren, damit die Größe des Luftspalts laut Datenblatt des Herstellers eingehalten wird.

Ungenügende Größen des Luftspaltes verursachen Schwingungen im Geschwindigkeitswert des Transportläufers, wobei es ein Ziel ist, diese Schwingungen zu vermeiden. In der Praxis stehen eher selten Messgeräte zur Verfügung, die zur Messung der Luftspaltgröße zwischen dem Transportläufer und dem Statorsegment eingesetzt werden können.

Es ist daher die Aufgabe der Erfindung mögliche Luftspaltabweichungen ohne externes Messgerät zu erkennen.

Die Aufgabe wird für das eingangs genannte Verfahren dadurch gelöst, dass eine Beschleunigungsfahrt des Transportläufers durchgeführt wird, dabei wird der aktuelle Statorstrom gemessen und es werden Geschwindigkeits-Istwerte ermittelt, aus welchem wiederum eine Geschwindigkeitsänderung pro Zeiteinheit ermittelt wird, aus welcher wiederum eine Beschleunigung ermittelt wird, wobei die aktuelle Vorschubkraft aus dem Produkt der Kraftkonstante und dem aktuellen Statorstrom ermittelt wird, wobei mit der aktuellen Vorschubkraft und der Beschleunigung eine virtuelle Masse des Transportläufers mit der Newtonschen Bewegungsgleichung ermittelt wird, wobei für eine Aussage über den derzeit vorherrschenden Luftspalt eine Beziehung zwischen einem Zuwachs der virtuellen Masse und einer Luftspaltvergrößerung genutzt wird und daraus ein Größenwert für den Luftspalt errechnet wird.

Von Vorteil ist es, dass das Erkennen der Größe des Luftspaltes nun mit den zur Verfügung stehenden Mitteln eines Steuerungssystems ohne zusätzliche Messgeräte realisiert werden kann. Unter der Kraftkonstante ist zu verstehen, wieviel Kraft in Newton der Motor mit 1 A Sinus-effektiv Strom erzeugt. Mit steigender Luftspaltgröße wird eine größere Stromstärke benötigt, um den Transportläufer bzw. eine Last mit der gleichen Dynamik zu bewegen. Dieser physikalische Zusammenhang wird dazu genutzt, um die Luftspaltgröße indirekt zu ermitteln. Für die Ermittlung wird ein Funktionsmodul herangezogen, welches auch als Trägheitsmomentschätzer, bezeichnet werden könnte. Dieses Funktionsmodul ermittelt eine aktuelle Last des Linearmotors unter Einbezug der Stromstärke und der Kraftkonstante. Aus der ermittelten Last bzw. der aktuellen Vorschubkraft lässt sich dann eine virtuelle Masse berechnen. Mithilfe der virtuellen Masse und der realen Masse des Transportläufers lässt sich die Luftspaltgröße ermitteln.

Weiterhin ist es von Vorteil, wenn eine Reibungskraft, welche zwischen den Transportläufer und Führungsschienen auftritt, kompensiert wird. Vor der Ermittlung der aktuellen Vorschubkraft sollte die Reibung zwischen dem Transportläufer und dem Statorsegment bekannt sein, weil ohne die Kompensation der Reibung dieses als zusätzliche Last bzw. zusätzliche Kraft interpretiert werden würde. Die Reibungskraft ist von der ermittelten Vorschubkraft abzuziehen. In der Regel erstellt man eine Reibkennlinie welche gleichmäßig über einen gesamten Geschwindigkeitsbereich verteilt ist, dieser wird dann für die Berechnung des Luftspalts mit einbezogen.

Um das rechnerische Verfahren mit Vorteil, beispielsweise in einem Funktionsbaustein einer speicherprogrammierbaren Steuerung zu implementieren, wird als Beziehung zwischen dem Zuwachs der virtuellen Masse und der Luftspaltvergrößerung eine Spline-Funktion verwendet, mit welcher mit stückweisen Polynomen niedrigen Grades interpoliert wird, wobei die Spline-Funktion Stützstellen aus einem x-Wert und einem y-Wert verwendet, wobei der x-Wert der ermittelten virtuellen Masse und der y-Wert dem Größenwert für den Luftspalt zugeordnet wird, dabei Beschreiten die Polymone der Spline-Funktion jeweils ein Intervall und die Randwerte der Intervalle sind Werten der virtuellen Masse zugeordnet, wobei anhand der ermittelten virtuellen Masse das zugehörige Intervall gesucht wird und dadurch das auszuwertende Polynom bestimmt wird.

Stützstelle ist ein Begriff aus der numerischen Mathematik. Man bezeichnet damit die Argumente von Funktionen, die für die weitere Rechnung genutzt werden. Verwendet wird der Begriff z.B. bei der Interpolation oder auch der numerischen Integration. Der zugehörige Funktionswert an der Stützstelle wird manchmal Stützwert genannt, das geordnete Paar aus Stützwert heißt dann Stützpunkt.

Von Vorteil ist es, wenn die zu ermittelnde virtuelle Masse in einem ersten Funktionsbaustein in einem Automatisierungsgerät berechnet wird, wobei als Eingangsgrößen der Statorstrom und die Geschwindigkeits-Istwerte mittels Sensoren, welche am Transportsystem betrieben werden, ermittelt werden, weitere Eingangsgrößen, wie die Kraftkonstante und eine reale Masse, werden aus einem Datenbaustein abgefragt. Das Verfahren wird weiter optimiert, wenn die Reibungskraft in einem zweiten Funktionsbaustein unter Zuhilfenahme einer Reibkennlinie ermittelt wird, und die Ermittlung des Luftspaltes in einem dritten Funktionsbaustein ermittelt wird.

Der Erfinder hat erkannt, dass bei steigender Größe des Luftspaltes der Motorstrom ansteigen muss, um die beschleunigende Kraft zu erhalten. Da die zu beschleunigende Masse direkt proportional von der beschleunigenden Kraft abhängt, steigt ebenfalls der Wert der Masse bzw. der virtuellen Masse an.

Eine Möglichkeit eine Funktion zur Ermittlung der Luftspaltgröße bereitzustellen, ist es den relativen Anstieg der virtuellen Masse in Abhängigkeit der realen Luftspaltgröße experimentell zu ermitteln, damit später der Luftspalt anhand der Messergebnisse berechnet werden kann. Diese Untersuchung kann mit Hilfe eines Laborexperimentes durchgeführt werden, indem beispielsweise die Luftspaltgröße zwischen den Transportläufer und dem Statorsegment durch Edelstahl-Bleche definiert beeinflusst wird. Man fängt beispielsweise mit Abstandsblechen von 0,5 mm an und steigert sich dann bis 2,5 mm in 0,1 mm Schritten. Aus allen Berechnungen der dabei auftretenden virtuellen Massen, wird im Anschluss ein relativer Anstieg der Masse (Zuwachs) pro Zehntel mm Luftspaltvergrößerung aufgezeichnet. Diese Werte können dann für die Berechnung der Luftspaltgröße herangezogen werden, in dem ausgehend vom realen Gewicht des Transportläufers eine Funktion berechnet wird, die die zu erwartenden Massen für die steigenden Luftspaltgrößen enthält. Aufgrund der gewonnenen Ergebnisse wird vorzugsweise eine lineare Spline-Funktion verwendet, welche die Abhängigkeit zwischen der Masse und der Luftspaltgröße mathematisch abbildet. Ausgehend von der realen Masse des Transportläufers inklusive dessen Beladung, wird die zu erwartende Masse in Abhängigkeit der Luftspaltgröße mathematisch nachgebildet. Das Ergebnis des Spline-Interpolation ist eine Funktion, die von 0,5 mm bis 2,5 mm die mit dem Luftspalt steigende Masse abbildet.

Die eingangs genannte Aufgabe wird ebenfalls durch ein Automatisierungsgerät gelöst, welches ausgestaltet ist, für eine Ermittlung des Luftspaltes zwischen einem Transportläufer und einem Statorsegment, wobei der Transportläufer und das Statorsegment als eine Linearmotoreinheit eines linearmotorbasierten Transportsystems ausgeführt sind, und der Linearmotoreinheit eine Kraftkonstante zugeordnet ist, wobei das Statorsegment mit einem Statorstrom versorgt wird, wodurch ein Magnetfeld gebildet wird und dadurch eine Vorschubkraft für einen Vorschub des Transportläufers entsteht. Für die Ermittlung des Luftspaltes sind dabei Mittel vorhanden, welche ausgestaltet sind, eine Beschleunigungsfahrt des Transportläufers durchzuführen, weiterhin sind Mittel vorhanden, welche ausgestaltet sind, den aktuellen Statorstrom zu messen und es sind weiterhin Mittel vorhanden, welche ausgestaltet sind, Geschwindigkeits-Istwerte des Transportläufers zu ermitteln und daraus wiederum eine Geschwindigkeitsänderung pro Zeiteinheit zu ermitteln, und daraus wiederum eine Beschleunigung zu ermitteln, wobei weiterhin Mittel vorhanden sind, die die aktuelle Vorschubkraft aus dem Produkt der Kraftkonstante und dem aktuellen Statorstrom ermitteln, wobei weiterhin Mittel vorhanden sind, die ausgestaltet sind, mit der aktuellen Vorschubkraft und der Beschleunigung eine virtuelle Masse des Transportläufers mit der Newtonschen Bewegungsgleichung zu ermitteln, wobei für eine Aussage über den derzeit vorherrschenden Luftspalt ein Prüfmittel vorhanden ist, welches ausgestaltet ist, einen Zuwachs der virtuellen Masse zu erkennen und mit einer Beziehung welche den Zuwachs der virtuellen Masse und einer Luftspaltvergrößerung beschreibt, einen Größenwert für den Luftspalt zu errechnen.

Die Ermittlung des Luftspaltes wird weiterhin verbessert, wenn das Automatisierungsgerät ein Mittel aufweist, welches ausgestaltet ist, eine Reibungskraft, welche zwischen dem Transportläufer und Führungsschiene auftritt, da zu kompensieren.

Besonders komfortabel ist es für einen Anwender des Automatisierungsgeräts, wenn das Prüfmittel bei dem Automatisierungsgerät weiterhin dazu ausgestaltet ist, die Beziehung zwischen dem Zuwachs der virtuellen Masse und der Luftspaltvergrößerung als eine Spline-Funktion bereitzustellen, welche mit stückweisen Polynomen niedrigen Grades interpoliert, wobei die Spline-Funktion Stützstellen aus einem x-Wert und einem y-Wert aufweist, wobei der x-Wert der ermittelten virtuellen Wellenmasse und der y-Wert dem Größenwert für den Luftspalt zugeordnet ist, dabei beschreiben die Polynome des Spline-Funktionen jeweils einen Intervall die Randwerte der Intervalle sind Werten der virtuellen Masse zuzuordnen, wobei anhand der ermittelten virtuellen Masse das zugehörige Intervall gesucht wird, und dadurch das Polynome bestimmt ist, mit welchem der Luftspalt ermittelt wird.

Mit der ermittelten Masse wird demnach so lange gesucht, bis der ermittelte Wert der Masse innerhalb eines Intervalls liegt, dass für die Berechnung der Luftspaltgröße verwendete Polynom ist dann das Polynom, welches zu dem gefundenen Intervall definiert wurde. Die Luftspaltgröße kann anschließend anhand der bereitgestellten Funktion berechnet werden. Dafür wird in die für das gefundene Intervall definierte Funktion als x-Wert die ermittelte Masse, abzüglich der Anfangskoordinate des gefundenen Intervalls eingesetzt.

Weiterhin ist es vorteilhaft, wenn das Automatisierungsgerät einen ersten Funktionsbaustein mit welchem die virtuelle Masse berechnet wird, aufweist, wobei Eingänge für Sensoren vorhanden sind, welche als Eingangsgrößen den Statorstrom und die Geschwindigkeits-Istwerte liefern, weiterhin ist ein Datenbaustein vorhanden, welcher die Kraftkonstante und eine reale Masse abgespeichert vorhält.

Für eine weitere Berechnung ist es von Vorteil, wenn das Automatisierungsgerät einen zweiten Funktionsbaustein aufweist, welcher unter Zuhilfenahme einer Reibkennlinie die Reibung ermittelt und weiterhin einen dritten Funktionsbaustein aufweist, welcher ausgestaltet ist, die Ermittlung des Luftspaltes durchzuführen.

Die Zeichnung zeigt ein Ausführungsbeispiel der Erfindung, dabei zeigt die
- FIG 1: ein linearmotorbasiertes Transportsystem,
- FIG 2: eine Übersicht des Verfahrens zur Luftspaltermittlung,
- FIG 3: experimentell ermittelte Messwerte in Abhängigkeit vom Luftspalt,
- FIG 4: die Auswertung einer Spline-Funktion,
- FIG 5: Vergleich der ermittelten Luftspaltgrößen und den realen Luftspaltgrößen und
- FIG 6: eine Übersicht über eine Regelung für eine Regeleinheit mit dem erfindungsgemäß eingesetzten Prüfmittel.

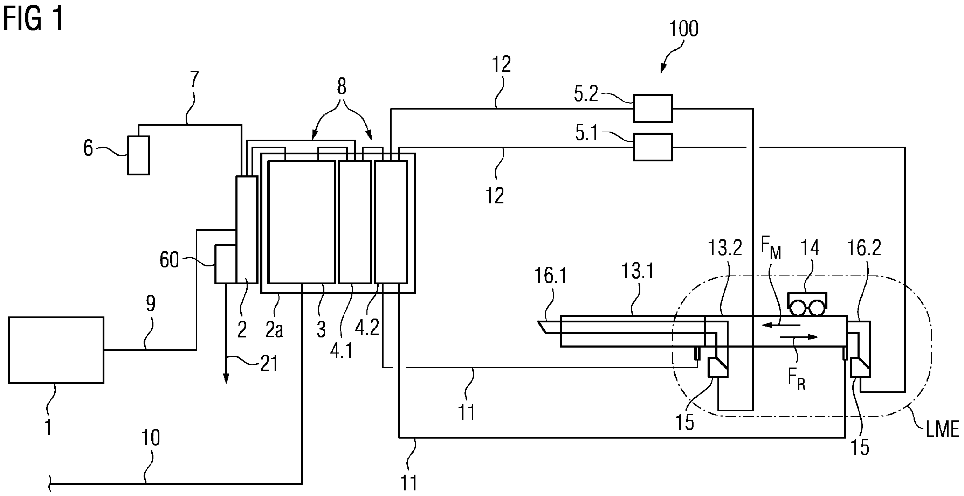

Gemäß FIG 1 ist eine Übersicht über ein linearmotorbasiertes Transportsystem 100 dargestellt. Ein Transportläufer 14 läuft über ein erstes Statorsegment 13.1 und ein zweites Statorsegment 13.2. An den Statorsegmenten 13.1,13.2 sind jeweils ein erstes Wegmesssystem 16.1 und ein zweites Wegmesssystem 16.2 angeordnet. Die Wegmesssysteme 16.1,16.2 sind an eine Geberleitung 12 angeschlossen. Die DRIVE-CLiQ-Geberleitung 12 ist an einen Feldbus 8 für Servoantriebe angeschlossen ist. Der Feldbus 8 ist wiederum mit einer Regeleinheit 2, einem Gleichrichter 3 und einem ersten Wechselrichter 4.1 und einem zweiten Wechselrichter 4.2 verbunden. Die Wechselrichter 4.1,4.2 versorgen über Motorzuleitungen 11 die Statorsegmente 13.1,13.2.

Die Regeleinheit 2 kann über ein Programmiergerät 1 und eine ETHERNET-Verbindung 9 entsprechend programmiert werden oder ein Firmwareupdate erhalten. Über eine Stromversorgung 6 erhält die Regeleinheit 2 ihre 24 V Versorgungsspannung über eine Versorgungsleitung 7.

Die Regeleinheit 2 zur Regelung des Antriebsmoduls 2a für das linearmotorbasierte Transportsystem 100 weist ein Prüfmittel 60 auf, wobei das Prüfmittel 60 ausgestaltet ist, den derzeit vorherrschenden Luftspalt *δ* zu ermitteln. Dazu ist das Prüfmittel 60 ausgestaltet einem Zuwachs Δ*m* der virtuellen Masse mᵥ zu erkennen und mit einer Beziehung, welche den Zuwachs Δ*m* der virtuellen Masse mᵥ und einer Luftspaltvergrößerung beschreibt einen Größenwert für den Luftspalt *δ* zu errechnen. Es weist ein Mittel auf, welches ausgestaltet ist, eine Reibungskraft F_{R}, welche zwischen dem Transportläufer 14 und Führungsschienen auftritt, zu kompensieren.

Das Prüfmittel 60 ist weiterhin ausgestaltet die Beziehung zwischen dem Zuwachs Δ*m* der virtuellen Masse mᵥ und der Luftspaltvergrößerung als eine Spline-Funktion f bereitzustellen, welche mit stückweisen Polynomen Pᵢ niedrigen Grades interpoliert, wobei die Spline-Funktion f Stützstellen x,y aus einem x-Wert x und einem y-Wert y aufweist, wobei der x-Wert x der ermittelten virtuellen Masse mᵥ und der y-Wert dem Größenwert für den Luftspalt *δ* zugeordnet ist, dabei beschreiben die Polynome Pi der Spline-Funktion f jeweils ein Intervall und die Randwerte der Intervalle sind Werten der virtuellen Masse mᵥ zugeordnet, wobei anhand der ermittelten virtuellen Masse mᵥ das zugehörige Intervall gesucht wird, und dadurch das Polynom Pi bestimmt ist, mit welchen der Luftspalt *δ* ermittelt wird.

Das Prüfmittel 60 erkennt präventiv eine Luftspaltveränderung in einer Produktionsanlage, welche mit dem linearmotorbasierten Transportsystem arbeitet.

Bei Erkennung einer Luftspaltveränderung wird ein Wartungssignal 21 generiert.

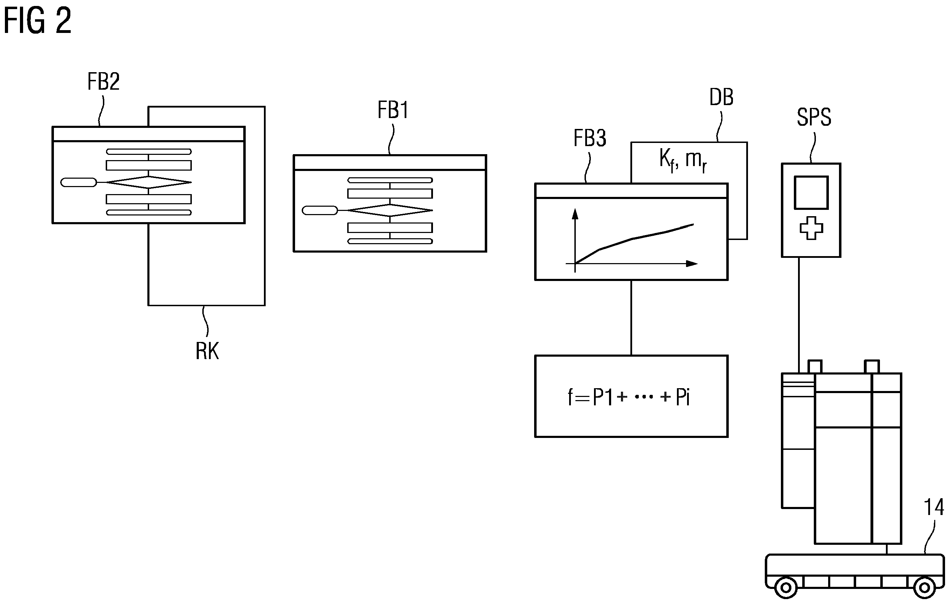

Gemäß FIG 2 ist das Prinzip des Verfahrens zur Ermittlung des Luftspaltes δ dargestellt. Mit einem ersten Funktionsbaustein FB1 wird eine virtuelle Masse mᵥ berechnet, als Eingangsgrößen verwendet der erste Funktionsbaustein FB1 den Statorstrom I_{q} und die Geschwindigkeitsistwerte Vᵢₛₜ. In einem Datenbaustein DB sind eine Kraftkonstante k_{f} und eine reale Masse mᵣ abgespeichert.

Mit einem zweiten Funktionsbaustein FB2 wird unter Zuhilfenahme einer Reibkennlinie RK eine Reibkraft zwischen dem Transportläufer und dem Statorsegment ermittelt.

Mit einem dritten Funktionsbaustein FB3 wird unter Zuhilfenahme einer Spline-Funktion f der aktuelle Luftspalt δ ermittelt. Der dritte Funktionsbaustein FB3 ist demnach ausgestaltet, eine Aussage über den derzeit vorherrschenden Luftspalt δ zu machen, wobei ein Zuwachs δm der virtuellen Masse mᵥ erkannt wird und mit einer Beziehung, welche den Zuwachs δm der virtuellen Masse MV und einer Luftspaltvergrößerung beschreibt, einen Größenwert für den Luftspalt δ zu errechnen.

Regelungsmittel sind dabei dazu ausgestaltet, eine Beschleunigungsfahrt des Transportläufers 14 durchzuführen, dabei ist insbesondere der erste Funktionsbaustein FB1 dazu ausgestaltet, mit dem gemessenen Statorstrom I_{q} und den Geschwindigkeitsistwerten Vᵢₛₜ eine Geschwindigkeitsänderung pro Zeiteinheit zu ermitteln. Aus dieser Geschwindigkeitsänderung pro Zeiteinheit wird wiederum eine Beschleunigung a ermittelt. Die aktuelle Vorschubkraft f_{M} wird dann aus dem Produkt der Kraftkonstante k_{f} und dem aktuellen Statorstrom I_{q} ermittelt. Mit der aktuellen Vorschubkraft f_{M} und der Beschleunigung a kann dann eine virtuelle Masse mᵥ des Transportläufers 14 mit der Newtschen Bewegungsgleichung ermittelt werden.

Die derart ermittelte virtuelle Masse mᵥ wird an den dritten Funktionsbaustein FB3 zur Berechnung der Luftspaltgröße weitergegeben.

In dem dritten Funktionsbaustein FB3 ist als Beziehung zwischen dem Zuwachs δm der virtuellen Masse mᵥ und der Luftspaltvergrößerung einer Spline-Funktion f mit Polynomen Pᵢ implementiert. Die Spline-Funktion f wird mit stückweisen Polynomen Pᵢ niedrigen Grades die Luftspaltgröße interpolieren.

Die Spline-Funktion f verwendet Stückstellen x,y, das einen x-Wert x und einen y-Wert y, wobei der x-Wert der ermittelten virtuellen Masse mᵥ und der y-Wert dem Größenwert für den Luftspalt δ zugeordnet wird. Die Polynome Pᵢ der Spline-Funktion f sind jeweils einem Intervall zugeordnet und die Randwerte der Intervalle sind Werten der virtuellen Masse mᵥ zugeordnet, wobei anhand der ermittelten virtuellen Masse mᵥ das zugehörige Intervall gesucht wird, und dadurch das auszuwertende Polynom Pᵢ bestimmt wird.

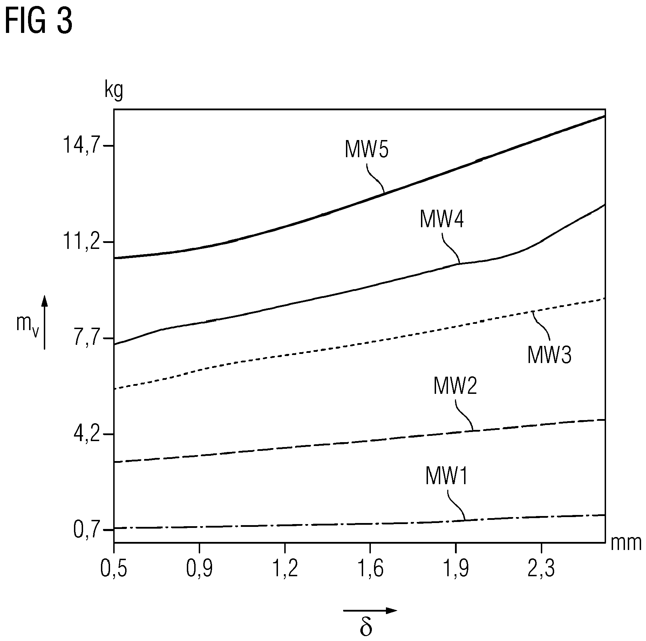

Mit der FIG 3 wird eine Möglichkeit aufgezeigt, wie man sich eine Spline-Funktion f experimentell ermitteln kann. Die FIG 3 zeigt ein Messwertdiagramm mit einer ersten Messwertreihe MW1, aufgenommen für eine Masse mᵣ von 0,77 kg, eine zweite Messwertreihe MW2, aufgenommen für eine Masse mᵣ von 3,18 kg, eine dritte Messwertreihe MW3, aufgenommen für eine Masse von mᵥ von 5,9 kg, eine vierte Messwertreihe MW4, aufgenommen für eine Masse mᵣ von 7,2 kg und eine fünfte Messwertreihe MW5, aufgenommen für eine Masse mᵣ von 9,63 kg. Eine erste Messung für die Messwertreihen MW1,...,MW5 wird bei einer Luftspaltgröße von 0,5 mm durchgeführt, denn das ist der Wert laut Datenblatt des verwendeten Motors. Der Transportläufer 14 wird dafür zunächst auf ein zu vermessendes Segment und anschließend zurück zum Startpunkt positioniert, wodurch sich automatisch eine Beschleunigungsphase des Transportläufers 14 auf dem Segment ergibt. Somit kann mit dem ersten Funktionsbaustein FB1 eine virtuelle Masse mᵥ ermittelt werden.

Experimentell können nun nacheinander Edelstahlbänder mit einer Dicke von 0,1 mm bis 0,5 mm in Zehntelmillimeter-Schritten in eine Führung zwischen dem Segment und dem Transportläufer eingelegt werden und jeweils die daraus resultierende virtuelle Masse mᵥ errechnet werden.

Diese Messwertermittlung wird außerdem mit verschiedenen Zusatzgewichten auf dem Transportläufer 14 durchgeführt, den relativen Anstieg der Masse für unterschiedliche Gewichte in die Betrachtung mit einzuschließen. Die erste Messwertreihe MW1 wird mit einem unbeladenen Transportläufer 14 durchgeführt, d.h. die Gesamtmasse beträgt 0,76 kg. Die Messungen werden dann für verschiedene Luftspaltgrößen im Bereich von 0,5 mm bis 2,5 mm ausgeführt und die Messergebnisse können mit Hilfe einer Aufzeichnungsfunktion in den Funktionsbaustein mit ausgewertet werden. Eingesetzt werden für die folgenden Messwertreihen MW1,...,MW5 Zusatzgewichte im Bereich von 2,42 kg bis 8,87 kg, damit das Gesamtgewicht des Transportläufers 14 zwischen den 0,76 kg und 9,63 kg wiegt. Der Gewichtsbereich wurde passend zu einem Maximalgewicht gewählt, dass bei einer Magnetplatte des Transportläufers 14 ca. 10 kg beträgt. Die Messergebnisse für die unterschiedlichen Gewichte, und den Abhängigkeiten der Luftspaltgröße, sind gemäß FIG 3 dargestellt.

Aus allen Resultaten wird im Anschluss der relative Anstieg der Masse m, also der Zuwachse Δ*m* pro zehntel-mm Luftspaltvergrößerung abgeleitet. Dieser abgeleitete Wert des Zuwachses Δ*m* kann dann für die Berechnung der Luftspaltgröße in der Spline-Funktion f herangezogen werden, dabei wird ausgehend von dem realen Gewicht des Transportläufers 14 die Spline-Funktion f bereitgestellt, die die zu erwartenden Massen für die steigenden Luftspaltgrößen enthält. Der Zuwachs Δ*m* wird dazu in mehrere Abschnitte eingeteilt und für jeden Abschnitt wird eine Gerade berechnet, die die Anstiegsrate der Masse wieder spiegelt. Die Abschnitte entsprechen dann den Polynomen Pᵢ der Spline-Funktion f.

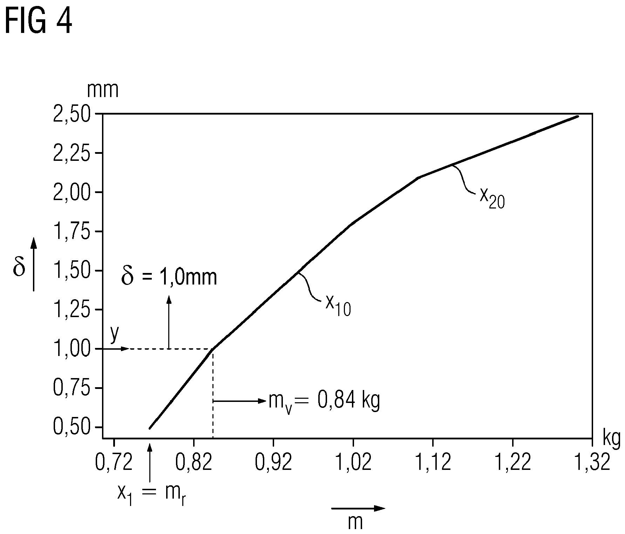

Mit der FIG 4 ist die Auswertung der Spline-Funktion f dargestellt. Die Spline-Funktion f weist 21 Stützstellen auf, wobei die erste Stützstelle x1 = mᵣ die Masse des Transportläufers 14 ist. Demnach sind die x-Werte in der dargestellten Funktion der Masse mᵣ zugeordnet und die y-Werte sind dem Luftspalt δ zugeordnet. Laut Datenblatt eines Motors ist der optimale Luftspalt bei 0,5 mm eingestellt. Die weiteren Stützpunkte x₁ bis x₂₀ zeigen jeweils eine Erhöhung des Luftspalts δ um 0,1 mm auf. Würde nun der erste Funktionsbaustein FB1 als eine virtuelle Masse mᵥ = 0,84 kg ermitteln, so kann aus der Spline-Funktion f der zugehörige Luftspalt y = Δ = 1,0 mm abgelesen bzw. errechnet werden.

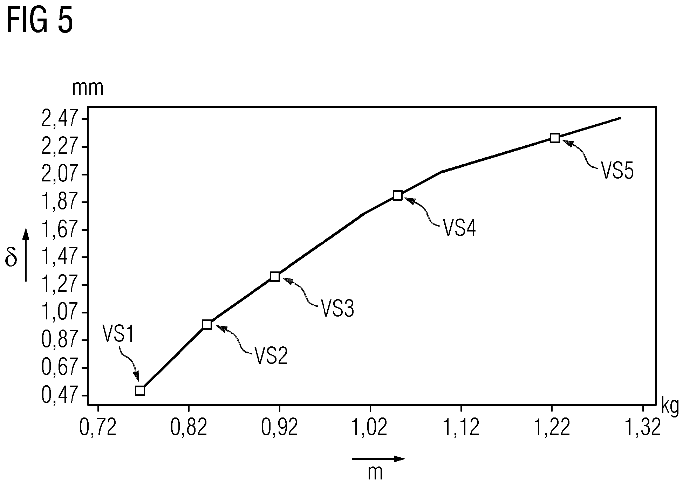

Die FIG 5 zeigt einen Vergleich von ermittelten Luftspaltgrößen zu den realen Luftspaltgrößen, wodurch eine ausreichende Genauigkeit der Spline-Funktion f bewiesen ist. Für eine erste Vergleichsstelle VS1 ergibt sich bei einem realen Luftspalt von 0,5 mm ein Messwert von 0,76 kg wodurch ein berechneter Luftspalt von 0,5 mm ermittelt wird und das entspricht einer Abweichung von 0,0 %. Bei einer zweiten Vergleichsstelle VS2 ergibt sich bei einem realen Luftspalt von 1,0 mm ein Messwert von 0,839 kg, welches zu einem berechneten Luftspalt von 0,988 mm führt und dies entspricht einer Abweichung von 1,2 %. Bei einer dritten Vergleichsstelle VS3 ergibt sich bei einem realen Luftspalt 1,5 mm ein Messwert von 0,915 kg, daraus resultiert ein berechneter Luftspalt von 1,342 mm welches einer Abweichung von 10,5 % entspricht. Bei einer vierten Vergleichsstelle VS4 ergibt sich bei einem realen Luftspalt von 2,0 mm ein Messwert von 1,5 kg, welches einem berechneten Luftspalt von 1,931 mm entspricht und daraus resultiert eine Abweichung von 3,5 %. Bei einer fünften Vergleichsstelle VS5 bei einem realen Luftspalt von 2,5 mm ergibt sich ein Messwert von 1,224 kg, welches zu einem berechneten Luftspalt von 2,354 mm führt und dass bedeutet eine Abweichung von 5,8 %.

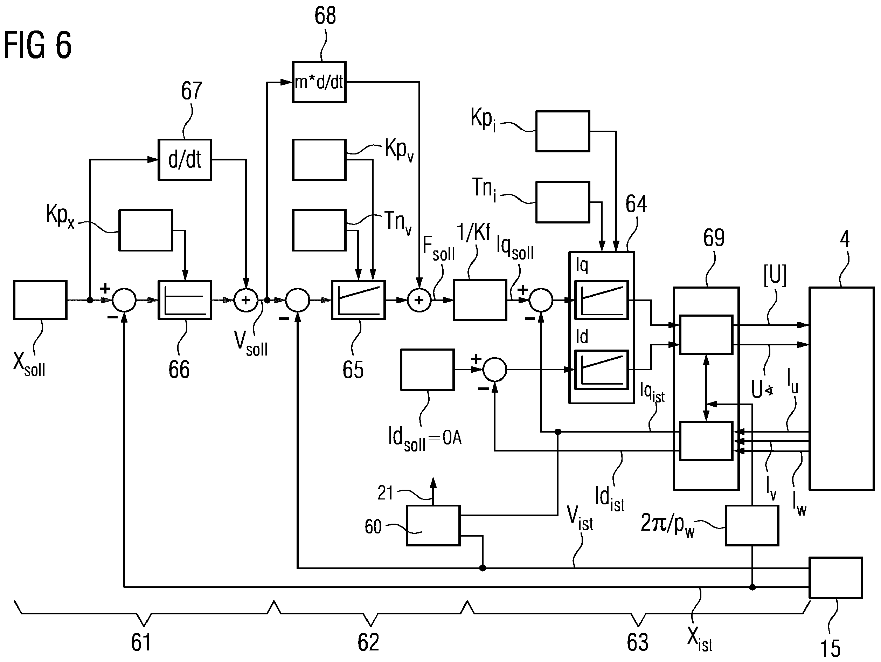

Mit der FIG 6 wird eine vektororientierte Servoregelung für die Statorsegmente 13.1 und 13.2 gezeigt. Diese Servoregelung untergliedert sich in eine Lageregelung 61, eine Geschwindigkeitsregelung 62 und eine Stromregelung (Vektorregelung) 63. Eine Sollposition Xₛₒₗₗ wird mittels eines Lagereglers 66 und einer Geschwindigkeitsvorsteuerung 67 geregelt. Eine Sollkraft Vₛₒₗₗ wird mittels einer Kraftvorsteuerung 68 und eines Geschwindigkeitsreglers 65 geregelt.

Die vektororientierte Servoregelung ist in einer Kaskadenstruktur aufgebaut und beinhaltet Lage-, Drehzahl- und Stromregelung. Die Stromregelung ist hier in der sogenannten Vektorregelung ausgeführt. Diese berechnet mit Hilfe des Kommutierungswinkels aus dem statorfesten Stromzeigersystem (UVW - Koordinatensystem), bestehend aus den Strömen Iᵤ, Iᵥ und I_{w}, das rotorfeste Stromzeigersystem (dq - Koordinatensystem), bestehend aus den Strömen I_{q} und I_{d}. Dabei ist I_{q} der momentenbildende Strom, welcher ein reiner Wirkstrom ist und I_{d} der feldbildende Strom ist. Dabei wird der feldbildende Strom I_{d} im geregelten Betrieb des Antriebs zu Null geregelt, das bedeutet, dass der Motor in keinem Arbeitspunkt im Feldschwächbetrieb betrieben wird. Die Drehzahl- und die Momentenvorsteuerung verbessern das jeweilige Führungsverhalten der Regler. Eine Nachstellzeit Tₙ und ein Proportionalteil Kₚ der einzelnen Regler können im Inbetriebnahmemodus automatisch bestimmt und auch angepasst werden. Da es sich hier nicht um die Regelung eines rotatorischen Synchronmotors handelt, sondern um die eines linearen Synchronmotors, welcher eine Kraft und kein Moment erzeugt, wird der momentenbildende Strom I_{q} kraftbildender Strom genannt. Außerdem handelt es sich im Folgenden um die Kraftvorsteuerung und nicht um die Momentenvorsteuerung. Der Drehzahlregler wird Geschwindigkeitsregler genannt und die Drehzahlvorsteuerung Geschwindigkeitsvorsteuerung.

Der Wechselrichter 4 erzeugt aus der Stellgröße der Vektorregelung einen Spannungszeiger, dargestellt durch Betrag |U| und Winkel ϕ, wobei über ein PWM Verfahren Signale zur Ansteuerung der IGBT's bereitgestellt werden. Im Motormodul werden die Regelgrößen (Phasenströme) für die Vektorregelung mit einer entsprechenden Messeinrichtung gemessen.

Die Geberauswertung stellt die Istgeschwindigkeit Vᵢₛₜ und die Istposition Xᵢₛₜ für die Servoregelung zur Verfügung. Durch Division der Istpositon Xᵢₛₜ durch die Polpaarweite p_{w} und Multiplikation von 2Pi wird der Kommutierungswinkel für die Vektorregelung berechnet.

Die Regelgröße der Geschwindigkeitsregelung ist die Geschwindigkeit des Transportläufers 14. Die Regelgröße wird mit einem PI-Regler so geregelt, dass diese dem Geschwindigkeitssollwert folgt. Der Regler berechnet die Sollkraft. Ist die Kraftvorsteuerung aktiviert, wird die Sollkraft mit dem Ausgang der Kraftvorsteuerung addiert. Die Addition ergibt die Stellgröße.

In dem vektororientierten Stromregelverfahren werden die Wechselgrößen (Regelgrößen) Iᵤ, Iᵥ, und I_{w} in das dq - Koordinatensystem mit dem Kommutierungswinkel berechnet.

Damit ergeben sich Gleichgrößen für die Istströme. Sie teilen sich in eine kraftbildende (I_{qist}) und eine feldbildende Komponente (I_{dist}) auf. Diese Gleichgrößen können nun mit herkömmlichen PI-Reglern geregelt werden. Notwendig ist jeweils ein PI Regler für den kraftbildenden Teil (I_{q} Regler) und einer für den feldbildenden Teil (I_{d} Regler). Der d-Anteil des Stromes kann verwendet werden um das Feld zu schwächen, dies wird wie bereits beschrieben nicht genutzt. Der Sollwert für die kraftbildende Stromkomponente I_{qsoll} ergibt sich durch Division der Stellgröße des Geschwindigkeitsreglers mit der Kraftkonstante K_{f}.

Um eine Luftspaltveränderung eines Transportläufers 14 frühzeitig zu erkennen, ist in dem Regelalgorithmus gemäß der FIG 6 das Prüfmittel 60 integriert.

## Patentansprüche

1. Verfahren zur Ermittlung eines Luftspaltes (*δ*) zwischen einem Transportläufer (14) und einem Statorsegment (13.1,13.2), wobei der Transportläufer (14) und das Statorsegment (13.1,13.2) als eine Linearmotoreinheit (LME) eines linearmotorbasierten Transportsystems (100) betrieben werden, und der Linearmotoreinheit (LME) eine Kraftkonstante (*k_{f}*) zugeordnet wird, wobei das Statorsegment (13.1,13.2) mit einem Statorstrom (Iq) versorgt wird, wodurch ein Magnetfeld gebildet wird und dadurch eine Vorschubkraft (F_{M}) für einen Vorschub des Transportläufers (14) entsteht,
**dadurch gekennzeichnet, dass** eine Beschleunigungsfahrt des Transportläufers (14) durchgeführt wird,
dabei wird der aktuelle Statorstrom (Iq) gemessen und es werden Geschwindigkeits-Istwerte (Vᵢₛₜ) ermittelt, aus welchem wiederum eine Geschwindigkeitsänderung pro Zeiteinheit ermittelt wird, aus welcher wiederum eine Beschleunigung (a) ermittelt wird, wobei die aktuelle Vorschubkraft (FM) aus dem Produkt der Kraftkonstante (*k_{f}*) und dem aktuellen Statorstrom (Iq) ermittelt wird, wobei mit der aktuellen Vorschubkraft (FM) und der Beschleunigung (a) eine virtuelle Masse (mᵥ) des Transportläufers (14) mit der Newtonschen Bewegungsgleichung ermittelt wird, wobei für eine Aussage über den derzeit vorherrschenden Luftspalt (*δ*) eine Beziehung zwischen einem Zuwachs (Δ*m*) der virtuellen Masse (mᵥ) und einer Luftspaltvergrößerung genutzt wird und daraus ein Größenwert für den Luftspalt (*δ*) errechnet wird.

2. Verfahren nach Anspruch 1, wobei eine Reibungskraft (F_{R}), welche zwischen dem Transportläufer (14) und Führungsschienen auftritt, kompensiert wird.

3. Verfahren nach Anspruch 1 oder 2, wobei als Beziehung zwischen dem Zuwachs (Δ*m*) der virtuellen Masse (mᵥ) und der Luftspaltvergrößerung eine Spline-Funktion (f) mit Polynomen (Pi) verwendet wird, mit welcher mit stückweisen Polynomen niedrigen Grades interpoliert wird, wobei die Spline-Funktion (f) Stützstellen (x,y) aus einem x-Wert (x) und einem y-Wert (y) verwendet, wobei
der x-Wert (x) der ermittelten virtuellen Masse (mᵥ) und der y-Wert dem Größenwert für den Luftspalt (*δ*) zugeordnet wird, dabei beschreiben die Polynome (Pi) der Spline-Funktion (f) jeweils ein Intervall und die Randwerte der Intervalle sind Werten der virtuellen Masse (mᵥ) zugeordnet, wobei anhand der ermittelten virtuellen Masse (mᵥ) das zugehörige Intervall gesucht wird, und dadurch das auszuwertende Polynom (Pi) bestimmt wird.

4. Verfahren nach einem der Ansprüche 1 bis 3, bei welchen die eine virtuelle Masse (mᵥ) in einem ersten Funktionsbaustein (FB1) in einem Automatisierungsgerät (SPS) berechnet wird, wobei als Eingangsgrößen der Statorstrom (Iq) und die die Geschwindigkeits-Istwerte (Vᵢₛₜ) mittels Sensoren, welche am Transportsystems (100) betrieben werden, ermittelt werden, weitere Eingangsgrößen, wie die Kraftkonstante (*K_{F}*) und eine reale Masse (mᵣ), werden aus einem Datenbaustein (DB) abgefragt.

5. Verfahren nach einem der Ansprüche 2 bis 4 wobei die Reibungskraft (F_{R}) in einem zweiten Funktionsbaustein (FB2) unter zu Hilfenahme einer Reibkennline (RK) ermittelt wird und die Ermittlung des Luftspaltes (*δ*) in einem dritten Funktionsbaustein (FB3) ermittelt wird.

6. Automatisierungsgerät (SPS) ausgestaltet für eine Ermittlung eines Luftspaltes (*δ*) zwischen einem Transportläufer (14) und einem Statorsegment (13.1,13.2), wobei der Transportläufer (14) und das Statorsegment (13.1,13.2) als eine Linearmotoreinheit (LME) eines linearmotorbasierten Transportsystems (100) ausgeführt sind, und der Linearmotoreinheit (LME) eine Kraftkonstante (*k_{f}*) zugeordnet ist, wobei das Statorsegment (13.1,13.2) mit einem Statorstrom (Iq) versorgt wird, wodurch ein Magnetfeld gebildet wird und dadurch eine Vorschubkraft (F_{M}) für einen Vorschub des Transportläufers (14) entsteht,
**dadurch gekennzeichnet, dass** Mittel vorhanden sind, welche ausgestaltet sind eine Beschleunigungsfahrt des Transportläufers (14) durchzuführen wird, weiter sind Mittel vorhanden, welche ausgestaltet sind den aktuellen Statorstrom (Iq) zumessen und es sind weiterhin Mittel vorhanden, welche ausgestaltet sind Geschwindigkeits-Istwerte (Vᵢₛₜ) des Transportläufers (14) zu ermitteln und daraus wiederum eine Geschwindigkeitsänderung pro Zeiteinheit zu ermitteln, und daraus wiederum eine Beschleunigung (a) zu ermitteln, wobei weiterhin Mittel vorhanden sind, die die aktuelle Vorschubkraft (FM) aus dem Produkt der Kraftkonstante (*K_{F}*) und dem aktuellen Statorstrom (Iq) ermitteln, wobei weiterhin Mittel vorhanden sind , die ausgestaltet sind mit der aktuellen Vorschubkraft (FM) und der Beschleunigung (a) eine virtuelle Masse (mᵥ) des Transportläufers (14) mit der Newtonschen Bewegungsgleichung zu ermitteln, wobei für eine Aussage über den derzeit vorherrschenden Luftspalt (*δ*) ein Prüfmittel (60) vorhanden ist, welches ausgestaltet ist einem Zuwachs (Δ*m*) der virtuellen Masse (mᵥ) zu erkennen und mit einer Beziehung, welche den Zuwachs (Δ*m*) der virtuellen Masse (mᵥ) und einer Luftspaltvergrößerung beschreibt einen Größenwert für den Luftspalt (*δ*) zu errechnen.

7. Automatisierungsgerät (SPS) nach Anspruch 6, aufweisend ein Mittel, welches ausgestaltet ist, eine Reibungskraft (F_{R}), welche zwischen dem Transportläufer (14) und Führungsschienen auftritt, zu kompensieren.

8. Automatisierungsgerät (SPS) nach Anspruch 6 oder 7, wobei das Prüfmittel (60) weiterhin ausgestaltet ist die Beziehung zwischen dem Zuwachs (Δ*m*) der virtuellen Masse (mᵥ) und der Luftspaltvergrößerung als eine Spline-Funktion (f) bereitzustellen, welche mit stückweisen Polynomen (Pᵢ) niedrigen Grades interpoliert, wobei die Spline-Funktion (f) Stützstellen (x,y) aus einem x-Wert (x) und einem y-Wert (y) aufweist, wobei der x-Wert (x) der ermittelten virtuellen Masse (mᵥ) und der y-Wert dem Größenwert für den Luftspalt (*δ*) zugeordnet ist, dabei beschreiben die Polynome (Pi) der Spline-Funktion (f) jeweils ein Intervall und die Randwerte der Intervalle sind Werten der virtuellen Masse (mᵥ) zugeordnet, wobei anhand der ermittelten virtuellen Masse (mᵥ) das zugehörige Intervall gesucht wird, und dadurch das Polynom (Pi) bestimmt ist, mit welchen der Luftspalt (*δ*) ermittelt wird.

9. Automatisierungsgerät (SPS) nach Anspruch 6 bis 7, aufweisend einem ersten Funktionsbaustein (FB1) mit welchem die virtuelle Masse (mᵥ) berechnet wird, wobei Eingänge für Sensoren vorhanden sind, welcher als Eingangsgrößen den Statorstrom (Iq) und die Geschwindigkeits-Istwerte (Vᵢₛₜ) liefern, weiterhin aufweisend einen Datenbaustein (DB), welcher die Kraftkonstante (*K_{F}*) und eine reale Masse (mᵣ) abgespeichert vorhält.

10. Automatisierungsgerät (SPS) nach Anspruch 7 bis 9, aufweisend einen zweiten Funktionsbaustein (FB2), welcher unter zu Hilfenahme einer Reibkennline (RK) die Reibung ermittelt und weiterhin aufweisend einen dritten Funktionsbaustein (FB3), welcher ausgestaltet ist die Ermittlung des Luftspaltes (*δ*) durchzuführen.
